# DEMANDE DE BREVET EUROPEEN

(11) **EP 0 736 831 A1**
(43) Date de publication de la demande: **09.10.1996**
(21) Numéro de dépôt: 96400721.5
(22) Date de dépôt: 03.04.1996
(51) Int. Cl.: G06F 11/30

(54) **Dispositif de gestion d'appels sélectifs cycliques pour la surveillance de ressources informatiques dans un réseau et procédé mis en oeuvre par un tel dispositif**

(30) Priorité: 06.04.1995 FR 9504093
(71) Demandeur: BULL S.A., 78430 Louveciennes (FR)
(72) Inventeur: Doumard, Raphael, 78340 Les Clayes sous Bois (FR)

(57) **Abrégé**

La présente invention concerne un dispositif de gestion d'appels sélectifs cycliques pour la surveillance de ressources informatiques dans un réseau, remarquable en ce que pour effectuer des requêtes de demandes d'information auprès des différentes ressources du réseau en utilisant un seul traitement et un seul rythmeur, chaque requête étant émise avec une fréquence propre, il comporte une table de données DT, indexée, contenant les données pour chaque requête à émettre ayant son propre index idx ainsi que sa période théorique pr d'émission, une table d'appels sélectifs cycliques PT contenant les index idx des requêtes avec les dates d d'émission, la table PT étant triée par ordre croissant des dates, la première ligne contenant la date la moins éloignée dans le temps et une table d'attente WT indexée par les index idx des requêtes émises en attente de réponses et contenant les dates d+pr des prochaines émissions, ledit dispositif mettant en oeuvre un procédé de gestion d'appels sélectifs cycliques exécutant parallèlement un premier sous-procédé déclenché dès qu'un appel sélectif cyclique est placé dans la table PT par un second sous-procédé, le premier sous-procédé vidant la table PT, remplissant la table WT et s'arrêtant lorsque la table PT est vide alors que le second sous-procédé, déclenché dès la réception d'une réponse à la requête en cours, remplit la table PT, vide la table WT et s'arrête lorsqu'il n'y a plus de requête en attente d'une réponse.

## Description

La présente invention concerne un dispositif de gestion d'appels sélectifs cycliques pour la surveillance de ressources informatiques dans un réseau. Elle concerne également un procédé mis en oeuvre par ledit dispositif.

De manière générale, lorsqu'il est désiré réaliser une surveillance des ressources informatiques dans un réseau, par exemple pour établir ou vérifier des performances dans ledit réseau, des requêtes d'informations sont émises à intervalles réguliers vers les ressources. Chaque requête, connue de l'homme du métier sous le nom d'appel sélectif cyclique ou "poll", est donc émise à intervalle régulier mais avec sa période propre vers une ressource particulière et est spécifique d'une demande d'informations caractéristique de cette ressource particulière utilisant pour cela des paramètres distincts.

Jusqu'à présent, pour effectuer ces requêtes avec une période bien déterminée, deux méthodes étaient employées. Selon la première méthode, il est créé un traitement, appelé "process" par l'homme du métier, lancé pour être exécuté à intervalle régulier délimité par un rythmeur appelé "timer" par l'homme du métier, chaque traitement spécifique d'une ressource est effectué indépendamment d'un autre traitement spécifique d'une autre ressource. Le choix d'une telle méthode implique, de manière incontournable, l'utilisation d'un grand nombre traitements ou "process", ce qui est un inconvénient majeur , puisqu'il est bien connu qu'un des problèmes rencontrés avec les systèmes informatiques est justement leur limitation en nombre de "process". Une seconde méthode consiste alors à utiliser un seul traitement qui contrôle également et simultanément l'ensemble des périodes propres à chaque requête et inclut par conséquent un nombre de rythmeurs égal au nombre de requêtes d'informations et donc égal au nombre de ressources à surveiller, gardant en mémoire que, chaque fois qu'un rythmeur arrive à échéance, ce dernier est automatiquement réarmé. Il est alors à l'usage constaté et ceci à partir d'un certain nombre de requêtes d'informations, un écroulement très significatif des performances d'un dispositif utilisant une telle méthode, ce qui dans ce domaine est un inconvénient rédhibitoire.

La présente invention a pour but de remédier aux divers inconvénients des différentes méthodes de l'art antérieur connues et propose un dispositif de gestion d'appels sélectifs cycliques pour la surveillance de ressources informatiques dans un réseau mettant en oeuvre un procédé utilisant un seul traitement tout en permettant de conserver, de manière aisée et efficace, un haut niveau de performances.

Pour cela, le dispositif de gestion d'appels sélectifs cycliques mentionné dans le préambule est remarquable en ce que, pour effectuer des requêtes de demandes d'information auprès des différentes ressources du réseau en utilisant un seul traitement et un seul rythmeur, chaque requête étant émise avec une fréquence propre, il comporte une première table DT dite table de données, indexée, contenant les données pour chaque requête à émettre ayant donc son propre index idx ainsi que sa période théorique pr d'émission, une seconde table PT dite table d'appels sélectifs cycliques contenant les index idx des requêtes avec les dates d d'émission, la table PT étant triée par ordre croissant des dates, c'est-à-dire la première ligne contenant la date la moins éloignée dans le temps et une troisième table WT dite table d'attente indexée par les index idx des requêtes émises en attente de réponses et contenant les dates d+pr des prochaines émissions, ledit dispositif mettant en oeuvre un procédé de gestion d'appels sélectifs cycliques exécutant parallèlement un premier sous-procédé déclenché dès qu'un appel sélectif cyclique est placé dans la table PT par un second sous-procédé, le premier sous-procédé vidant la table PT, remplissant la table WT et s'arrêtant lorsque la table PT est vide alors que le second sous-procédé, déclenché dès la réception d'une réponse à la requête en cours, remplit la table PT, vide la table WT et s'arrête lorsqu'il n'y a plus de requête en attente d'une réponse.

Ainsi, selon l'idée de l'invention et ceci contre toute attente, il a été décidé de n'utiliser qu'un seul traitement et de limiter le nombre de rythmeurs, malgré un préjugé très défavorable, à une simple unité. En effet, l'opinion en la matière est qu'il n'est possible de limiter le nombre de rythmeurs qu'au prix d'une très forte augmentation de la complexité du procédé de gestion qui rend, a priori, cette idée totalement inapplicable.

Avantageusement, le procédé de gestion d'appels sélectifs cycliques mis en oeuvre par le dispositif selon l'invention est remarquable en ce que, le premier sous-procédé une fois déclenché, dans une première étape, effectue une lecture de la date d et de l'index idx présents à la première ligne de la table PT et efface cette première ligne, dans une seconde étape, si la table PT n'est pas vide, initialise le rythmeur, identifie à la nouvelle première ligne de la table PT la date d' et l'index idx' et applique une première fonction de réveil pour exécuter à la date d' ledit premier sous-procédé pour l'index idx', dans une troisième étape, lit à la ligne de la table DT ayant pour index idx, d'une part les données concernant les demandes d'informations spécifiques à la requête à émettre et d'autre part la période pr pour calculer la date d+pr, dans une quatrième étape, autorise l'émision sur le réseau de la requête relative à un identificateur id-req propre à la requête à émettre, dans une cinquième étape, ajoute dans la table WT une ligne contenant l'index idx et la date d+pr, puis dans une sixième étape, applique une seconde fonction de réveil pour l'exécution du second sous-procédé, à la réception de la réponse à la requête relative à l'identificateur id-req, l'identificateur id-req étant conservé en paramètres, alors que le second sous-procédé est déclenché pour, dans une première étape, lire, à la ligne de la table WT ayant pour index idx, la date du prochain appel sélectif cyclique, dans une seconde étape, effacer la ligne de la table WT ayant pour index idx, calculer à partir de la date d+pr du prochain appel sélectif cyclique la position à laquelle insérer cette date pour conserver la table PT triée, dans une quatrième étape, insérer la date d+pr et l'index idx à la position calculée dans la table PT, puis dans une cinquième étape, soit, si la position calculée correspond à la première ligne de la table PT, annuler l'action de la première fonction de réveil appliquée par le premier sous-procédé si cette dernière est toujours active et relancer la seconde étape du premier sous-procédé soit, terminer si le traitement des informations reçues relatives à la réponse à la requête émise est effectué, le premier sous procédé étant activé jusqu'à ce que la table PT soit vide et le second sous-procédé s'arrêtant lorsqu'il n'y a plus de requêtes en attente.

Ainsi, connaissant la durée de la période pr après laquelle il faut agir et sachant que la table PT est triée, il est possible de savoir à quelle date envoyer la requête, par exemple sous la forme d'une fonction de type GET. Pour cela, il est mis dans la table PT l'index correspondant à la requête concernée dans la table DT ainsi que la date à laquelle lancer ladite requête sur le réseau. Dès que la requête est émise la ligne concernée de la table PT est effacée, l'index correspondant est placé dans la table WT avec éventuellement les informations utiles s'y rapportant et, après son calcul, le temps théorique d+pr auquel ladite requête devrait être réémise, cependant, la réponse à cette requête est attendue et aucune requête pour la même demande d'information spécifique à la ressource n'est réémise tant que cette réponse n'est pas reçue. Lorsque la réponse à cette requête est reçue, la date réelle à laquelle doit être réémise cette requête est calculée et insérée à la bonne position dans la table PT et comme cette table est toujours triée, le premier élément apparaissant à la première ligne de la table PT est le premier élément à émettre.

Pour une meilleure appréhension de l'idée de l'invention, la description suivante, qui n'est bien entendu pas limitative, fera bien comprendre comment l'invention peut être réalisée.

Avec les différents langages informatiques utilisés et plus particulièrement avec les langages pilotés par les données ou les évènements, couramment appelés par l'homme du métier langages "event-driven", une requête est émise sur le réseau avec un identifiant propre à cette requête, il est alors aisé de discriminer la réponse à cette requête en restant à l'écoute de ladite réponse sur cet identifiant. Il est à noter que, selon la présente invention dont le concept est de n'utiliser qu'un seul traitement et un seul rythmeur, chaque requête doit être traitée de manière indépendante d'une autre requête, une requête est propre à une demande d'information spécifique à une ressource informatique du réseau, ce qui signifie que deux requêtes identiques à destination de deux ressources différentes, et ceci même si les deux ressources sont identiques, sont considérées comme deux requêtes spécifiques avec chacune leur propre index et leur propre période et sont donc traitées de manière indépendante. Lorsque la réponse en provenance du réseau est reçue, une fonction de réveil active une procédure de reprise dite procédure de "callback" qui elle-même contient le traitement relatif au contenu de la réponse, cette procédure étant donc associée à la réception du résultat de la requête. Ainsi par exemple, en prenant le cas d'un service de surveillance de performances, une action peut être définie, à la réception d'une réponse, telle que, si la température d'un élément surveillé dépasse un seuil prédéterminé, une alarme est générée. De même et simultanément avec le traitement des résultats contenus dans une réponse, à l'arrivée de cette réponse, la prochaine émission de la requête concernée est calculée et la date calculée placée à la position adéquate dans la table PT. Une idée esssentielle est qu'une requête ne peut être émise tant que la réponse à la requête précédente n'est pas reçue. Cependant, de manière remarquable, il peut être prévu qu'au bout d'un temps prédéterminé, si la réponse à une requête n'est pas reçue ladite requête est inhibée et la requête suivante est émise. Il a été statistiquement remarqué qu'un tel traitement est exceptionnel et équivaut à un traitement d'erreur, mais pour éviter un éventuel blocage du système, ce traitement est important et nécessaire.

A titre de comparaison, avec la solution de l'art antérieur pour laquelle une pluralité de rythmeurs est utilisée, chaque rythmeur étant associé à une requête et donc à une action à entreprendre, les requêtes sont émises à chaque période et ceci que les réponses soient ou ne soient pas reçues. Ainsi, lorsqu'il n'est pas reçu de réponse à une requête, cette dernière est continûment réémise sur le réseau, ce qui surcharge inutilement ledit réseau alors qu'en outre, plus celle-ci est réémise et plus les performances s'écroulent.

Cependant, l'idée de n'utiliser qu'un seul traitement et un seul rythmeur n'était pas sans poser de problèmes et il existait de sérieux préjugés quant à la possibilité de son application, compte tenu de l'augmentation de la complexité que cela entraînait relativement au procédé de gestion. Chaque requête à émettre est, dans ce cas, concernée par un contexte particulier qui doit permettre de déterminer sans ambiguïté la requête elle-même, la période d'émission et les actions à entreprendre lors de la réception de la réponse à cette requête. C'est l'utilisation de tables indexées contenant les informations pertinentes qui autorise la reconstitution du contexte adéquat, chaque lecture d'un élément du contexte étant réalisée à partir de l'index concerné. Les informations utiles sont constituées de deux parties, une partie statique comportant la requête, les ressources pour lesquelles les informations sont demandées, la période et une partie dynamique, modifiée à chaque demande d'informations, dans laquelle sont stockés les résultats des dernières requêtes et ceci pour chaque requête et donc pour chaque index. C'est selon le contenu de cette partie dynamique que sont déterminées les actions à entreprendre, par exemple pour la surveillance des performances (génération d'alarme, notification de changement d'une valeur, etc.). Le traitement et l'aiguillage des requêtes réalisés à partir d'un seul rythmeur implique une légère perte de temps puisqu'il est nécessaire d'aller chercher les informations utiles dans les tables indexées, ainsi il faut, à chaque fois, lire et déterminer l'index dans la table DT pour pouvoir repositionner tous les éléments et réaliser l'appel sélectif cyclique puis modifier en reprenant les nouvelles informations reçues. Cependant, cette perte de temps est non seulement, plus que compensée, mais de plus les performances sont significativement améliorées par rapport au dispositif et au procédé de l'art antérieur. En effet, la gestion d'une pluralité de rythmeurs est d'une grande lourdeur et les performances d'un traitement s'en trouvent considérablement affectées et assez rapidement ont tendance à s'écrouler. Au contraire, l'utilisation du dispositif et du procédé conformes à l'invention montre au travers d'une simulation du réseau qu'il existe des écarts très minimes entre les périodes théoriques calculées et les périodes réelles obtenues du fait de l'attente des réponses aux requêtes, ces ecarts étant de l'ordre de cinq pour mille. En outre, un autre avantage est dégagé relativement au dispositif et au procédé de l'art antérieur, car lorsqu'il est désiré, à un moment donné, changer une période pr, l'algorithme décrivant les différentes étapes du procédé reste inchangé, il sufffit de modifier ladite période pr et à la prochaine lecture la nouvelle période pr' sera utilisée et le calcul d+pr' réalisé. Au contraire, avec un rythmeur qui boucle constamment, il est nécessaire d'arrêter ce dernier pour modifier la période en modifiant l'algorithme, puis de relire toutes les informations chargées et enfin de relancer le rythmeur.

En fait, pour réduire significativement la complexité de gestion et vaincre les préjugés émis à l'encontre du concept utilisé selon la présente invention, il a été nécessaire de dégager un certain nombre d'étapes systématiques engendrant le procédé à mettre en oeuvre par le dispositif ici revendiqué. Ainsi, le rythmeur est armé relativement à la première ligne de la table PT, puis quand il arrive à échéance il est relancé pour la ligne suivante de manière à être continuellement actif alors que la première ligne est traitée, c'est-à-dire que la requête concernée est émise sur le réseau et que simultanément cette première ligne est effacée dans la table PT et mise en attente dans la table WT. Le rythmeur est donc systématiquement réarmé jusqu'à la dernière requête. Dans le cas très particulier d'une panne de réseau telle qu'une ligne coupée, aucune des requêtes émises ne reçoit de réponse, au fur et à mesure des émissions les requêtes sont inhibées, petit à petit la table PT se vide et lorsque cette table est complètement vide le rythmeur n'est plus réarmé et le processus s'arrête. En revenant au cas général et de manière effective, toutes les informations nécessaires étant dans la table DT, l'algorithme dès le départ calcule la date de la prochaine requête pour la mettre dans la table WT afin que lorsque la réponse arrive il ne soit pas nécessaire de relire la table DT pour pouvoir insérer la date calculée à la position convenable dans la table PT qui reste ainsi parfaitement triée.

Le cas particulier suivant, d'une extrême simplicité fournit un exemple d'école permettant d'encore mieux appréhender le procédé mis en oeuvre par le dispositif selon la présente invention. Supposons qu'une seule et unique requête soit à traiter, les tables DT et PT ne présentent donc qu'une seule ligne, la table DT contenant un seul index idx, une seule période pr et les données relatives à une seule requête et la table PT contenant une seule date d et l'index idx. Conformément au présent procédé, le rythmeur est armé et quand il va arriver à échéance, comme il n'y a pas de ligne suivante il n'est pas réarmé. A l'échéance donc. la ligne de la table PT est effacée et, après calcul, la date d+pr ainsi que l'index idx sont placés dans la table WT, la requête est émise et la réponse attendue. A la réception de la réponse, le traitement propre aux résultats est effectué alors que la date d+pr et l'index sont placés dans la table PT à la position adéquate, c'est-à-dire à la première ligne puisqu'il n'existe qu'une unique ligne et donc le rythmeur est à nouveau réarmé.

Avant d'exposer un exemple d'algorithmes permettant de décrire le procédé utilisé dans la présente invention, diverses fonctions ou fonctionnalités générales, que l'on peut trouver à quelques différences minimes près dans bon nombre de langages informatiques, seront explicitées ci-après:
- soit une fonction appelée dans la suite "launchAfter" qui réveille le processus après un temps déterminé t et exécute une fonction fct, la fonction fct et le temps t étant passés en paramètres,
- soit une fonction appelée dans la suite "removeTimer" qui annule l'action de la fonction "launchAfter" précédemment exécutée. Si la fonction "launchAfter" n'est à cet instant pas active, aucune action n'est effectuée,
- soit une fonction appelée dans la suite "sendRequest" qui émet une requête sur le réseau et fournit un identificateur de requête id-req,
- soit une fonction appelée dans la suite "onReceive" qui réveille le processus à la réception de la réponse à une requête id-req et exécute une fonction fct, la fonction fct étant passée en paramètres sous forme de contexte,
- soit une fonction appelée dans la suite "findPositionPollTable" qui prend en paramètres une date et fournit la position à laquelle doit être insérée cette date pour conserver la table PT triée,
- soit une fonction appelée dans la suite "getActualTime" qui donne la date actuelle,
- soit une fonction appelée dans la suite "processResponse" qui effectue le traitement des informations reçues lors de la réponse à la requête émise.

Egalement, les conventions et notations suivantes seront utilisées:
- PollTable[n] signifie la nième ligne (date d et index idx) de la table PT,
- DataTable[idx] ou WaitTable[idx] signifie la ligne de la table DT ou de la table WT ayant idx pour index,
- WaitTable[fin] signifie la dernière ligne de la table WT,
- l'affectation sera représentée par le signe "←",
- en outre, lorsqu'une ligne d'une table est effacée, il doit être compris que les lignes suivantes sont décalées et le nombre de lignes diminue d'une unité.

Une fois ces définitions posées le premier sous-procédé selon l'invention peut dans cet exemple être décrit à partir de l'algorithme 1 suivant:

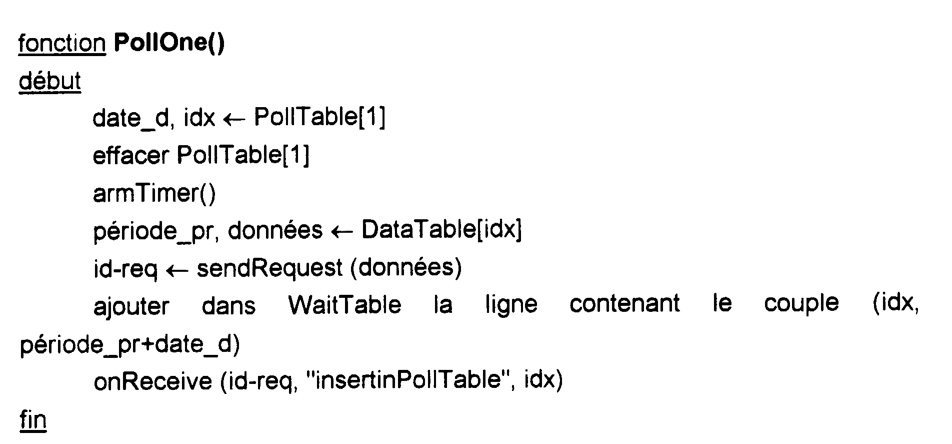

Remarque: la fonction "insertinPollTable" est décrite avec le second sous-procédé et donc l'algorithme 2.

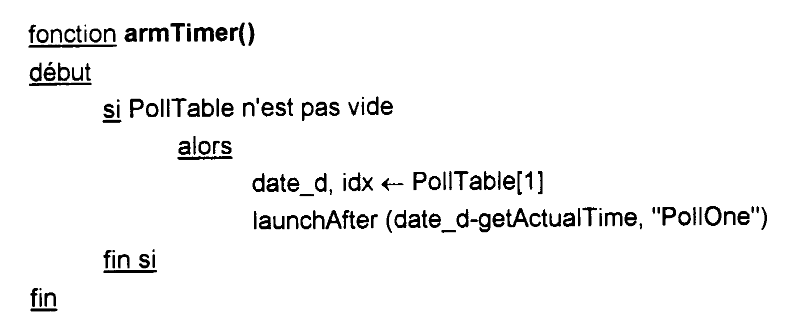

A la réception de la réponse à la requête, l'algorithme 2 suivant s'exécute:

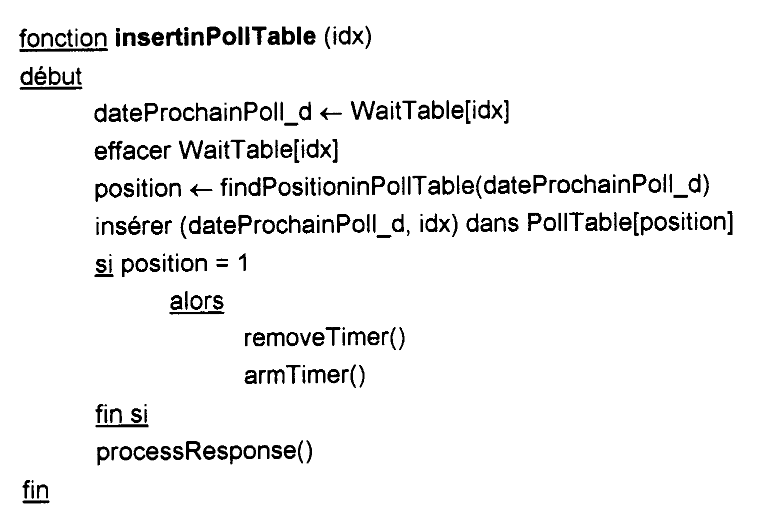

De manière remarquable, la fonction "insertinPollTable représentative du second sous-procédé et donc de l'algorithme 2 peut être utilisée pour ajouter de nouveaux appels selectifs cycliques à traiter dans le dispositif.

Ainsi, pour résumer la mise en oeuvre du procédé selon l'invention, le premier sous-procédé et par conséquent l'algorithme 1 est déclenché dès qu'une requête ou "poll" est placée dans la table PT lors de l'activation de la fonction "insertinPollTable" (second sous-procédé), il vide la table PT et remplit la table WT et s'arrête dès que table PT est vide. Le second sous-procédé et donc l'algorithme 2 est, lui, déclenché dès la réception d'une réponse à une requête émise, il remplit alors la table PT et vide la table WT, il s'arrête dès qu'il n'y a plus de réponse de requête en attente.

Les deux sous-procédés, en fait, travaillent sur les mêmes tables, sur les mêmes données, de la même manière qu'avec deux piles, un sous-procédé vidant une première "pile", la table PT, alors que le second la remplit et vice-versa avec la seconde, la table WT. Les deux sous-procédés sont mis en oeuvre en parallèle et agissent presque indépendamment l'un de l'autre, la table DT étant le seul lien entre eux, le premier étant déclenché par le rythmeur et le second par la réception des réponses aux requêtes.

Pour conclure, le dispositif de gestion d'appels sélectifs cycliques pour la surveillance de ressources informatiques du réseau et le procédé mis en oeuvre conformément à l'invention permettent, en utilisant un seul traitement et un seul rythmeur, et ceci malgré un préjugé très défavorable, de conserver avantageusement et de manière aisée, comme cela vient d'être décrit un haut niveau de performance.

## Revendications

1. Dispositif de gestion d'appels sélectifs cycliques pour la surveillance de ressources informatiques dans un réseau, caractérisé en ce que pour effectuer des requêtes de demandes d'information auprès des différentes ressources du réseau en utilisant un seul traitement et un seul rythmeur, chaque requête étant émise avec une fréquence propre, il comporte une première table DT dite table de données, indexée, contenant les données pour chaque requête à émettre ayant donc son propre index idx ainsi que sa période théorique pr d'émission, une seconde table PT dite table d'appels sélectifs cycliques contenant les index idx des requêtes avec les dates d d'émission, la table PT étant triée par ordre croissant des dates, c'est-à-dire la première ligne contenant la date la moins éloignée dans le temps et une troisième table WT dite table d'attente indexée par les index idx des requêtes émises en attente de réponses et contenant les dates d+pr des prochaines émissions, ledit dispositif mettant en oeuvre un procédé de gestion d'appels sélectifs cycliques exécutant parallèlement un premier sous-procédé déclenché dès qu'un appel sélectif cyclique est placé dans la table PT par un second sous-procédé, le premier sous-procédé vidant la table PT, remplissant la table WT et s'arrêtant lorsque la table PT est vide alors que le second sous-procédé, déclenché dès la réception d'une réponse à la requête en cours, remplit la table PT, vide la table WT et s'arrête lorsqu'il n'y a plus de requête en attente d'une réponse.

2. Procédé de gestion d'appels sélectifs cycliques mis en oeuvre par le dispositif de gestion d'appels sélectifs cycliques selon la revendication 1, caractérisé en ce que le premier sous-procédé une fois déclenché, dans une première étape, effectue une lecture de la date d et de l'index idx présents à la première ligne de la table PT et efface cette première ligne, dans une seconde étape, si la table PT n'est pas vide, initialise le rythmeur, identifie à la nouvelle première ligne de la table PT la date d' et l'index idx' et applique une première fonction de réveil pour exécuter à la date d' ledit premier sous-procédé pour l'index idx', dans une troisième étape, lit à la ligne de la table DT ayant pour index idx, d'une part les données concernant les demandes d'informations spécifiques à la requête à émettre et d'autre part la période pr pour calculer la date d+pr, dans une quatrième étape, autorise l'émision sur le réseau de la requête relative à un identificateur id-req propre à la requête à émettre, dans une cinquième étape, ajoute dans la table WT une ligne contenant l'index idx et la date d+pr, puis dans une sixième étape, applique une seconde fonction de réveil pour l'exécution du second sous-procédé à la réception de la réponse à la requête relative à l'identificateur id-req, l'identificateur id-req étant conservé en paramètres, alors que le second sous-procédé est déclenché pour, dans une première étape, lire, à la ligne de la table WT ayant pour index idx, la date du prochain appel sélectif cyclique, dans une seconde étape, effacer la ligne de la table WT ayant pour index idx, calculer à partir de la date d+pr du prochain appel sélectif cyclique la position à laquelle insérer cette date pour conserver la table PT triée, dans une quatrième étape, insérer la date d+pr et l'index idx à la position calculée dans la table PT, puis dans une cinquième étape, soit, si la position calculée correspond à la première ligne de la table PT, annuler l'action de la première fonction de réveil appliquée par le premier sous-procédé si cette dernière est toujours active et relancer la seconde étape du premier sous-procédé soit, terminer si le traitement des informations reçues relatives à la réponse à la requête émise est effectué, le premier sous procédé étant activé jusqu'à ce que la table PT soit vide et le second sous-procédé s'arrêtant lorsqu'il n'y a plus de requêtes en attente.

3. Procédé de gestion d'appels sélectifs cycliques selon la revendication 2, caractérisé en ce que, lors de son exécution il est prévu qu'au bout d'un temps prédéterminé, si la réponse à une requête n'est pas reçue, ladite requête est inhibée.

4. Procédé de gestion d'appels sélectifs cycliques selon la revendication 2 ou 3, caractérisé en ce que le second sous-procédé est utilisé pour ajouter de nouveaux appels selectifs cycliques à traiter.
